# EUROPEAN PATENT SPECIFICATION

(11) **EP 0 567 179 B1**
(45) Date of publication and mention of the grant of the patent: **02.01.1997**
(21) Application number: 93200892.3
(22) Date of filing: 29.03.1993
(51) Int. Cl.: H04N 1/028, H04N 1/04

(54) **Optically butted electro-optical components**
Optisch aneinandergefügte elektro-optische Bauteile
Composants électro-optiques optiquement aboutés

(30) Priority: 22.04.1992 EP 92201132
(43) Date of publication of application: 27.10.1993
(73) Proprietor: AGFA-GEVAERT naamloze vennootschap, B-2640 Mortsel (BE)
(72) Inventor: Costrop, Dirk, c/o Agfa-Gevaert N.V., B-2640 Mortsel (BE); Trouillard, Frank, c/o Agfa-Gevaert N.V., B-2640 Mortsel (BE); Pandelaers, Patrick, c/o Agfa-Gevaert N.V., B-2640 Mortsel (BE)

(56) References cited:
- FR-A- 2 480 462
- US-A- 4 385 325
- SPIE vol. 149, 1978, REDONDO BEACH, CALIF., US. pages 156 - 165 R. A. WHITTLESEY 'A high-resolution, high-speed film scanner system using optically butted charge-coupled devices (CCDs)'

## Description

### BACKGROUND OF THE INVENTION

### Field of the invention

The present invention relates to optically butted electro-optical components in general, and to optically butted CCD (charge coupled devices) linear array sensors in image reading apparatus for providing electric signals corresponding to the image of an original by optical scanning, in particular.

### Description of the prior art

In an image reading apparatus employed, for example, in a facsimile apparatus or a graphic scanner, an original moving in a determined direction is illuminated with light, and the reflected or transmitted light is focused through a lens onto a photoelectric converter, such as a linear photosensor array, to provide time-sequential electric image signals corresponding to a scanning line. Said photosensor array is usually composed of a CCD array or a photodiode array on which the image of a scanning line is focused by said lens.

The resolving power of the image is determined by that of the photosensor array, which is equal to the number of photoelectric converting elements in said photosensor array. Usually the number of said elements in a today's CCD photosensor array is limited to 7500. CCD sensors with 10.000 components do exist but they are unproportionately expensive.

Image-reading apparatus are known comprising optical path dividing means, e.g. semitransparent prisms, for dividing the path for the light beam of a scanning line into two paths that each lead to a subfocal plane. A number of CCD's are mounted in both focal subplanes in staggered relationship so as to form optically butted CCD's. This technique is disclosed, e.g. in the article "A high-resolution, high-speed film scanner system using optically butted charge-coupled devices", by R.A. Whittlesey in SPIE, Vol . 149, 1978, p. 156-185.

A problem with the described arrangement is the exact spacial mounting of each CCD in its corresponding subfocal plane. This is generally done by means of adjustment screws, levers, springs and the like that have their effect on five parameters that determine the exact position of a CCD component, viz. the lateral and the vertical position of the component, the rotation in its own plane, the axial position on the optical axis and the tilting about an axis normal to the optical axis and its own longitudinal axis. The process of adjustment is complicated by the fact that a CCD chip is often mounted very uncareful in its housing by the manufacturer. For instance, tolerances up to 0.5 mm between the positions of the lateral ends of a chip and the rear or front wall of the housing, usually a ceramic housing covered and closed by a glass panel , are not uncommon.

### SUMMARY OF THE INVENTION

### Object of the invention

It is an object of the invention to provide an imaging system with optically butted electro-optical components, which comprises fixing means allowing the correct spacial position of the components to be easily set.

It is a further object of the invention to provide an imaging system of the type disclosed, with fixing means for each electro-optical component featuring five degrees of freedom, to align and fix the electro-optical components very stable in time under varying environmental conditions (temperature and moisture in particular).

It is in particular an object of the invention to provide an imaging system comprising optically butted CCD linear array sensors for use in an image scanner.

### Statement of the invention

According to the present invention an imaging system which comprises lens means for focusing a first focal plane onto a second focal plane, optical path dividing means located between the lens means and one of said planes for dividing the optical path into at least two optical sub-paths leading to corresponding subfocal planes, at least one -electro-optical component arranged in one and at least one other electro-optical component arranged in the other of said subfocal planes, and fixing means for fixing the spacial position of said electro-optical components so that the butted images thereof are in line and in focus in the other focal plane of the system, is characterized thereby that said fixing means comprises for each of said subfocal planes an elongate glass member with a mounting surface for the corresponding component(s), and at least two mounting legs with a base surface and a supporting surface extending truly rectangularly on such base surface, the base surfaces being adhesively bonded to the mounting surface of said glass members and the supporting surfaces being adhesively bonded to lateral surfaces of the corresponding electro-optical component(s).

The term electro-optical stands in the present specification for receiving and transmitting components that can be point-like, linear or two-dimensional.

According to a suitable embodiment of the invention, the optical path dividing means is formed by a glass beam splitter, and the mounting surfaces for the mounting legs are formed by corresponding surfaces of such beam splitter. This allows to obtain a very stable mounting of the distinct electro-optical components in space and in time, and overcomes package constraints of the electro-optical components.

The imaging system according to the present invention is destinated in the first place for obtaining an improved resolution in image scanning by means of optically butted charge-coupled devices, it being understood that the CCD's are located in the image (sub)focal plane of the system whereas the original to be scanned is located in the object focal plane of the system.

The inventive system can, however, also be used to align a plurality of two-dimensional sensor arrays, or light-emitting electro-optical components such as laser diodes.

Further, the optical path dividing means can also be arranged for splitting the optical path into subpaths that relate to a given part of the spectrum of the entering light, e.g. a blue, a green and a red subpath, these paths further conducting to optically overlapping sensors.

Suitable embodiments of the invention are as follows.

The lateral mounting surfaces of said electro-optical components are formed by laterally opposed surfaces of the free end of rectangular cantilever-type supports fitted on the side of the components remote from the mounting surface of the glass member.

Said cantilever-type supports comprise two rectangular blocks extending beyond both lateral ends of said electro-optical components and are fixed thereto by adhesive bonding.

Said blocks are made of glass. This has the advantage that the adhesive bonding can be done by means of an ultra violet curable resin so that once the correct position of the component has been obtained a short high-intensity exposure to UV light will cure the adhesive.

The imaging system comprises four mounting legs for each electrooptical component, said four legs being formed by the two legs of two U-like yokes, the opposed innerside surfaces of the legs forming the supporting surfaces co-operating with the opposed surfaces of the free ends of the cantilever-type supports, the legs of said yokes fitting with a small clearance over the free ends of said cantilever-type supports.

### BRIEF DESCRIPTION OF THE DRAWINGS

The invention will be described hereinafter by way of example with reference to the accompanying drawings wherein :
Fig. 1 is a diagrammatic representation of one embodiment of an imaging system according to the present invention,
Fig. 2 is an enlarged view of the lens and the beam splitter with the CCD image sensors mounted thereon, of Fig. 1,
Fig. 3 is a view according to the arrow 3 of Fig. 2,
Fig. 4 is a view according to the arrow 4 of Fig. 2,
Fig. 5 is an enlarged isometric view of a mounting yoke,
Fig. 6 is an enlarged isometric view of another embodiment of a mounting leg,
Fig. 7 is an enlarged isometric view of still another embodiment of mounting legs, and
Fig. 8 is an enlarged isometric view of still another embodiment comprising two mounting legs.

### Detailed description of the invention

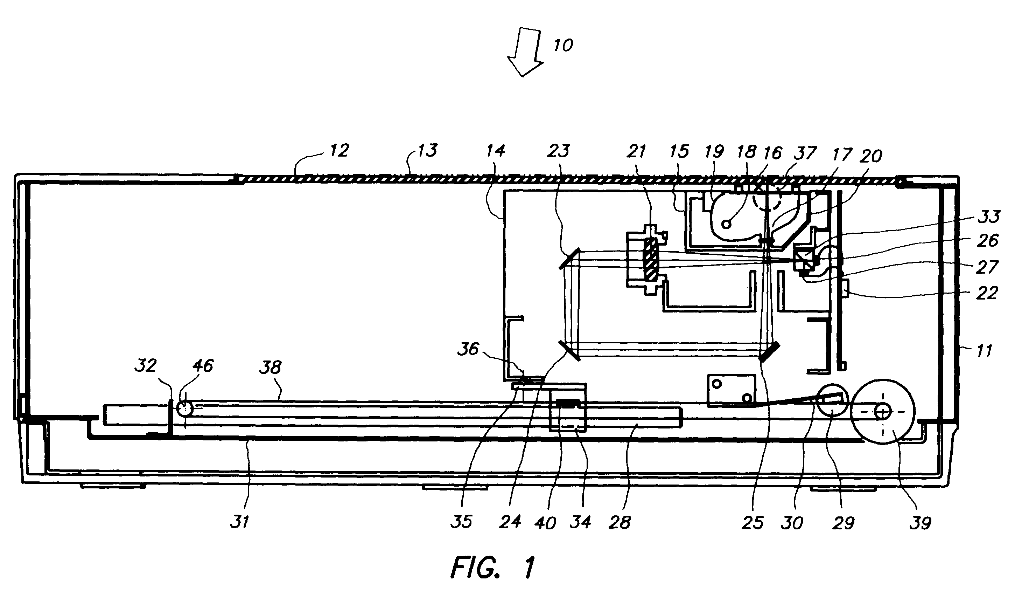

Referring to Fig. 1 which is an image scanner 10 for scanning a document thereby to produce an electric output signal which is representative for the document, the apparatus is mounted within a light-tight cabinet 11 having at the top a clear glass plate 12 on which a document 13 to be scanned can be laid.

Inside the apparatus there is a scanning carriage 14 with a light box 15. The top of the light box has a light-transmitting opening 16 and the bottom of the box has an exposure slot 17. Both openings extend transversely of the box. The light box comprises a tubular exposure lamp 18 and curved reflectors 19 and 20 directing light upwardly trough opening 16.

The scanning carriage 14 further comprises a lens 21 and mirrors 23, 24 and 25. The lens is mounted such that a sharp image line of document 14 is focused on light-sensor arrays 26 and 27, which are mounted on a beam splitter 33 and transduce the optical line signal into an electric line signal that is conducted to an output terminal 22. This terminal is connected to an output cable (not shown) for transmission of the signal to processing means, e.g. in the form of a visual display unit, a photographic printing apparatus for producing a visible or developable latent image on a printing plate or other component, a thermographic printer, a facsimile apparatus, etc.

The scanning carriage is displaceable according to the longitudinal direction of the scanner through the intermediary of a central supporting rod 28 and two lateral supporting rollers, only one being visible as 29. Rod 28 is fixed to base plate 31 by a bracket 32, and guides via a precision sleeve 34 a support 35 along a truly rectilinear path. Support 35 is connected to carriage 14 via an elastic coupling 36.

The lateral supporting rollers are connected to the scanning unit via elastic arms, such as the arm 30, whereby the scanning unit is urged upwardly thereby making rolling contact with the lower side of the glass plate via two laterally spaced bearing members, which can be conventional ball bearings, one being shown as 37.

The described arrangement ensures that translation of the scanning carriage occurs in a place running truly parallel with the glass plate since the glass plate in fact forms the reference support for the scanning unit. In this way, the sharpness of an image line reproduced on the sensor arrays 26 and 27 is limited only by occasional imperfections in the geometry of the glass plate 12. Further details about the guide system of the scanning unit and of its adjustment can be found in our co-pending application entitled "Optical scanning apparatus" filed in EU on March 3, 1991 under No. 91 200 531.1 and published under EP-A-0 503 165 on 16.09.1992.

The drive of the scanning carriage is represented in a simplified way by a steel cable 38 and a motor 39, the upper reach of the cable being coupled with support 35 at position 40. A suitable drive system for the carriage is described in detail in our co-pending application entitled "Drive system for a scanning unit" filed in EU on September 26, 1991, under No. 91 202 504.6 and published under EP-A-0 534 008 on 31.03.1993.

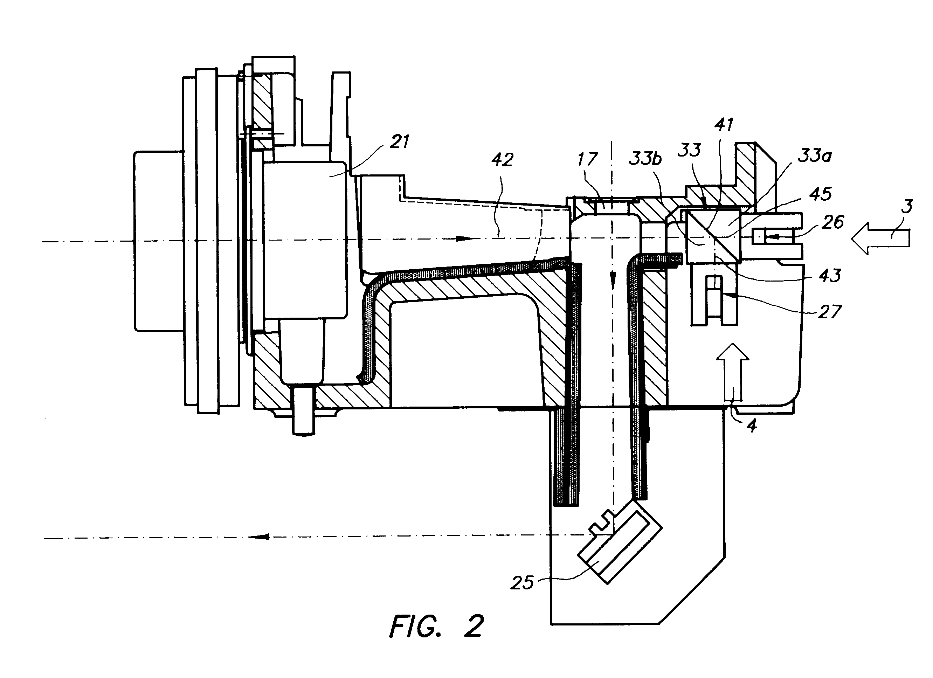

Fig. 2 is an enlarged view of lens 21 and beam splitter 33 with light sensor arrays 26 and 27 mounted on adjacent faces of the beam splitter.

The beam splitter is a conventional glass beam with a square cross section being assembled from two triangular subbeams 33a and 33b that are united on common face 41 operating as a semitransparent mirror to reflect a portion of the incoming radiation of path 42 to sensors 27 on subpath 43, and transmit another portion to sensors 26 on subpath 45.

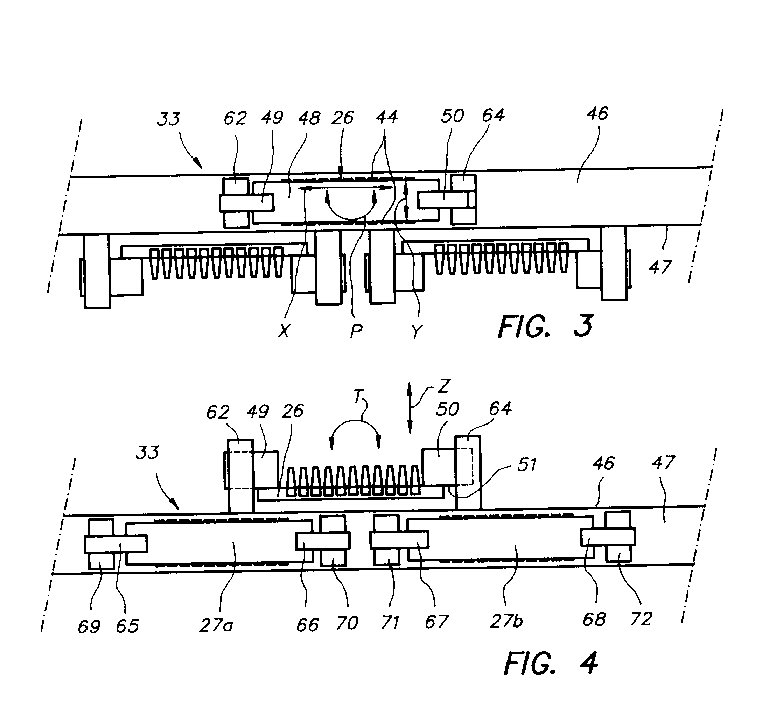

A detailed view of the mounting of sensor arrays 26 and 27 is shown in Figs. 3 and 4, being detailed views of Fig. 2 according to the respective arrows 3 and 4.

The sensor arrangement comprises in fact three distinct CCD image sensors, one CCD sensor 26 being mounted on the rear surface 46 of beam splitter 33, and two other CCD sensors 27a and 27b being mounted in staggered relationship on the bottom surface 47 of the beam splitter. The CCD sensors are conventional components consisting of a ceramic housing with two rows of connector pins 44 at the rear side of the sensor and a glass panel (not shown) covering the front side of the sensor. A microchip comprising thousands of distinct sensors is embedded in the housing and can be exposed through the glass panel. It has been mentioned already that mounting of the sensor chip in the housing is done with limited precision by the manufacturer of this component. Consequently it is clear that the different faces of the ceramic housing do not constitute a true reference plane for such mounting.

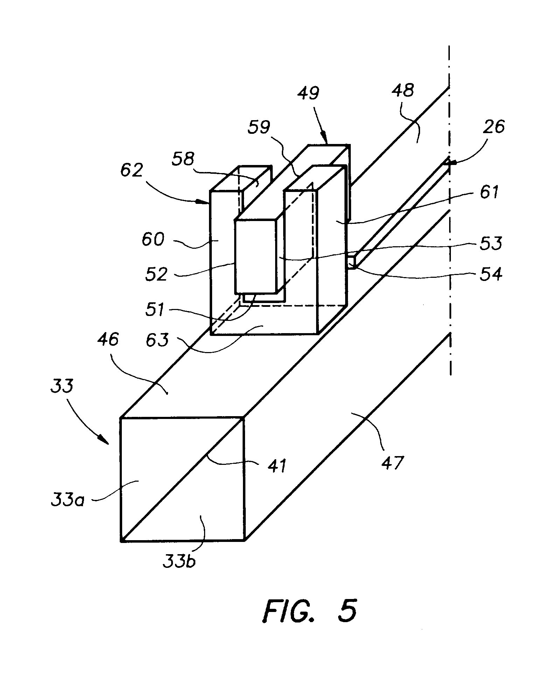

The mounting of a CCD sensor is described hereinafter for sensor 26 with reference to Figs. 3 to 5.

First, there is the preparation of the CCD sensor in view of its mounting on the beam splitter. The top surface 48 of the CCD sensor is provided with two upstanding supports 49 and 50 which in the present embodiment are square blocks cut e.g. from a sheet of float glass. It is important for these blocks that their bottom surface, viz. surface 51 that will be adhesively bonded to the sensor top surface 48, be truly perpendicular to their opposed lateral surfaces 52 and 53. A suitable way of carrying out the described adhesive bonding is to locate both supports 49 and 50 in an appropriate holder, the bonding surfaces 51 pointing upwardly, to apply adhesive to said surfaces and then to put the CCD sensor upside down on said bonding surfaces while exerting a slight pressure. There is not any need for the supports to take an accurate position on the ends of the CCD sensor, as long as an end portion of them freely projects in cantilever position over the transverse end edges 54 of the CCD sensors in order to leave freely accessible lateral surfaces 52 and 53, and is located approximately on the longitudinal centre line of the CCD sensor. The sensor is left in position until the adhesive has set under conditions of heat, moisture, or UV-radiation, depending on the type of adhesive used.

Surfaces 52 and 53 co-operate with supporting surfaces 58 and 59 which are the parallel inner surfaces of the legs 60 and 61 of yoke 62. Surfaces 58 and 59 are truly normal to bottom surface 63 of yoke 62. The distance between inner surfaces 58 and 59 is very slightly larger than the correspondng distance between surfaces 52 and 53 of support 49.

The mounting of a sensor prepared as described hereinbefore is as follows. A zero insertion force socket is put over the connection pins of the sensor and locked so that any further manipulation of the sensor can occur by means of this socket. This socket clampfits in a frame making part of an adjusting mechanism with micrometer setting screws, known on themselves, for altering the spacial position of the sensor as will be described hereinafter. Adhesive has been applied to the bottom face 63 of two yokes 62 and 64 standing on surface 46 of beam splitter 33. Small spring means, not shown, bias the yokes on the beam splitter, while yet allowing sliding and rotational motions of the yokes on the beam splitter. Adhesive has also been applied to the lateral faces 52 and 53 of cantilever supports 49 and 50 at either end of the sensor.

An appropriate optical test pattern is projected through lens 21 on the sensor, and the electric output signal of the sensor is displayed on the screen of a CRT in order to show the position of the sensor. Then the adjustment screws are actuated to set the sensor in its correct spacial position. This setting involves five independent adjustments.

First, a longitudinal adjustment as indicated by arrow X in Fig. 3. Second, a transverse adjustment as indicated by Y, and third a pivotal adjustment as indicated by P. It should be understood that during these adjustments the base faces of yokes 62 and 64 are free to become displaced over face 46 of the beam splitter while still being urged under a slight bias thereon. The mutual distance between the yokes is fully uncritical as long as there is a sufficient contact area between the lateral surfaces of supports 49 and 50, and the corresponding supporting faces of the legs of the yokes.

The fourth adjustment of the CCD sensor involves a vertical displacement of the sensor, as indicated by Z in Fig. 4, and a fifth adjustment is a tilting in the plane of supports 49 and 50 as indicated by T.

The correct spacial position of the CCD sensor being obtained as described, the adhesive of the different bonding places is made to quickly set, e.g. by exposure to UV-radiation.

Next the two CCD sensors 27a and 27b are mounted on face 47 of the beam splitter. The two sensors have been provided with cantilever supports 65 to 68 as described hereinbefore for supports 49 and 50 of CCD sensor 26, and are engaged with yokes 69 to 72 and with zero insertion force connectors for co-operation with appropriate positioning means to enable the individual adjustment of both sensors. Sensors 27a and 27b partially overlap sensor 26 since the outer ends of the packages of the sensors are not sensitive to light. Both sensors 27a and 27b are accurately adjusted in order to bring them in line and in focus with the projected line of the test image. It should be understood that the image subplanes of the system are not the two output faces of the beam splitter but planes that are a few millimeters distant therefrom.

The following data illustrate the described system.
CCD sensors 26, 27a and 27b : type TCD 106C-2.
   5000 pixels per sensor.
Scanning width of document 13 : 302 mm.
Supports 49, 50 and 65 to 68 : made from float glass
   thickness : 4 mm
   size : 6 x 12 mm
Yokes 62, 64 and 69 to 72 : made from float glass
   thickness : 5 mm
Maximum clearance between the legs of the yokes and the cantilever supports : 0.07 mm.
Adhesive used for bonding : UV-curable resin on methacrylate-acrylate basis
Maximum shrinkage of the adhesive during curing : 3 %.

The invention is not limited to the described embodiment but may comprise four or more CCD sensors mounted optically butted in order to further increase the image resolution.

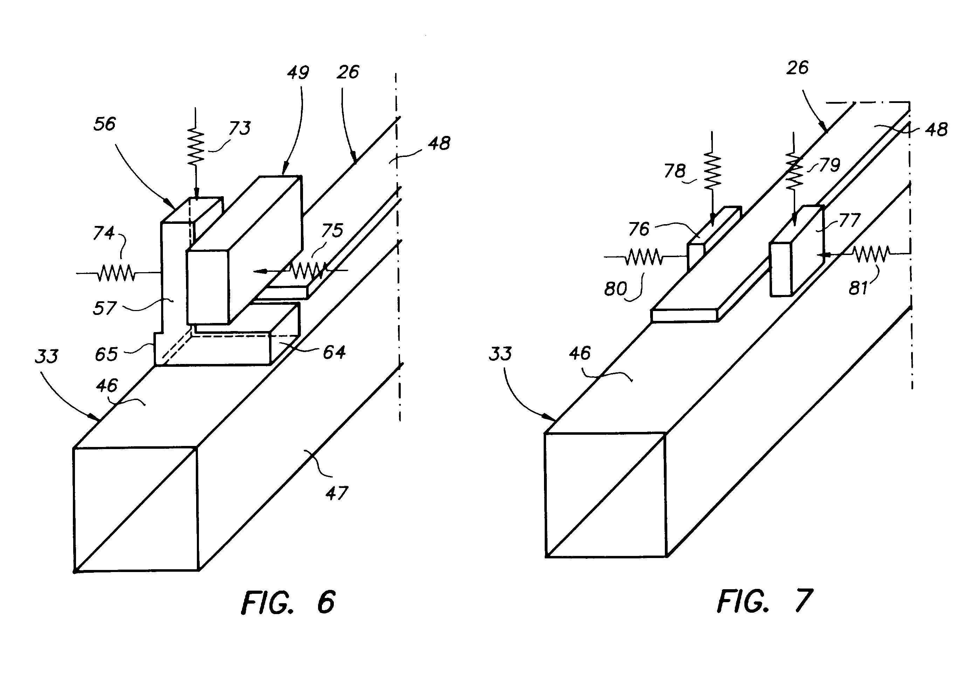

Fig. 6 illustrates an embodiment, which comprises two legs only for holding a CCD sensor 26.

Each leg is formed by the upstanding leg of an L-like member, such as member 56, which has an upstanding leg 57 and a base 64 resting on surface 46 of beam splitter 33.

Base 64 may occasionally have a heel 65 for better stabilizing on the beam splitter during adjustment.

First spring means, shown diagrammatically by spring 73, is provided for resiliently urging base 64 onto the beam splitter.

Second spring means, shown diagrammatically by springs 74 and 75, resiliently urge supporting block 49 in contact with the corresponding supporting surface of leg 57. It should be understood that the biasing force of the distinct spring means is such as to allow unhindered three-dimensional displacement of support 49 during adjustment of the position of sensor 26, while yet maintaining tight contact of corresponding surfaces with the thin layer of adhesive separating them from each other.

After the correct position of CCD sensor 26 has been obtained, the adhesive is made to cure after which the beam splitter can be removed from its holder and reversed over 90 degrees in order to mount CCD sensors 27a and 27b in a similar way on surface 47.

Fig. 7 illustrates an embodiment in which no preparation of a CCD sensor occurs. As a matter of fact, a CCD sensor 26 is mounted on beam splitter 33 by means of four mounting legs, only two of them being shown as 76 and 77. The legs can be rectangular components cut from float glass that are biased on lateral longitudinal sides of sensor 26 and on surface 46 of beam splitter 33 by appropriate spring means, shown diagrammatically by springs 78, 79 and 80, 81 respectively.

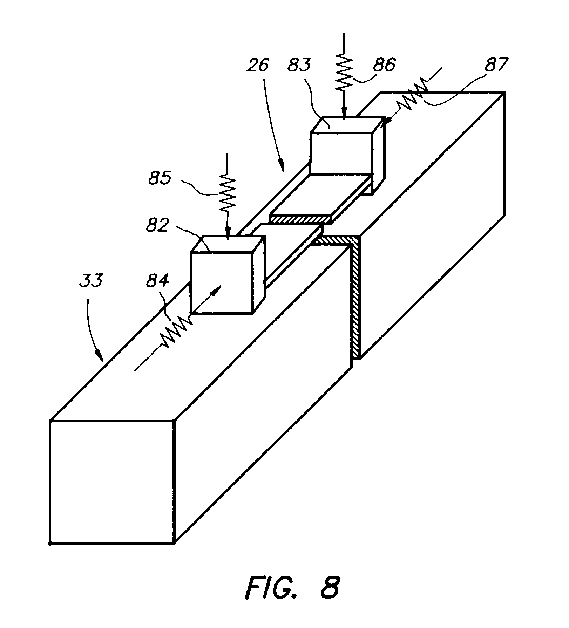

Fig. 8, finally, illustrates another embodiment in which no preparation of a CCD sensor is done. CCD sensor 26, shown partly broken away, is mounted on beam splitter 33 by means of two mounting legs 82 and 83 having a width corresponding nearly with that of the sensor and being mounted at the transverse ends of the sensor. The legs are biased during their adjustment by spring means, shown diagrammatically by springs 84, 85, 86 and 87 respectively.

The invention is not limited to the use of UV-curable resins. Thus the yokes or legs for mounting the optical components need not necessarily be made of glass but may also be made of metal, ceramics, and the like. In that case the adhesive must be a type that cures e.g. under conditions of moisture or heat.

Finally, it should be understood that the imaging system according to the invention is not limited to the use of CCD sensors or linear arrays of photosensitive sensors in general , but that it encompasses also line-like light emitters of limited length that are mounted in the focal subplanes of beam-splitting means in order to produce in the opposite focal plane of an optical system one line of light of substantial length.

## Claims

1. An imaging system which comprises lens means for focusing a first focal plane onto a second focal plane, optical path dividing means located between the lens means and one of said planes for dividing the optical path into at least two optical subpaths leading to corresponding subfocal planes, at least one electro-optical component arranged in one and at least one other electro-optical component arranged in the other of said subfocal planes, and fixing means for fixing the spacial position of said electrooptical components so that the butted images thereof are in line and in focus in the other focal plane of the system,
characterized in that said fixing means comprises for each of said subfocal planes an elongate glass member (33) with a mounting surface (46,47) for the corresponding component(s), and at least two mounting legs (60,61) with a base surface (63) and a supporting surface (58,59) extending truly rectangularly on such base surface, the base surfaces being adhesively bonded to the mounting surface (46,47) of said glass member and the supporting surfaces (58,59) being adhesively bonded to lateral surfaces of the corresponding electro-optical component(s).

2. An imaging system according to claim 1, wherein said electro-optical components are linear components, and said lateral surfaces run parallel with the linear direction of such components.

3. An imaging system according to claim 1 or 2, wherein said lateral surfaces of said electro-optical components are formed by lateral surfaces (52,53) of the free end of rectangular cantilever-type supports fitted on the side of the components (26) remote of the mounting surface (46) of the glass member.

4. An imaging system according to claim 3, wherein said cantilever-type supports are formed by two rectangular blocks (49,50) extending beyond the transverse end edges (54) of said electro-optical components.

5. An imaging system according to claim 4, wherein said blocks are fitted to said electro-optical components by adhesive bonding.

6. An imaging system according to 5, wherein said blocks are made of glass.

7. An imaging system according to any of claims 3 to 6, which comprises four mounting legs for each electro-optical component.

8. An imaging system according to claim 7, wherein said four legs are formed by the two legs of two U-like yokes, the opposed inner surfaces of the legs forming the supporting surfaces co-operating with the free ends of the cantilever-type supports for the adhesive bonding of said supports to said legs, the legs of said yokes fitting with a small clearance over the free ends of said cantilever-type supports.

9. An imaging system according to claim 8, wherein said clearance is smaller than 0.07 mm.

10. An imaging system according to any of claims 1 to 9, wherein the electro-optical components are linear array sensors arranged in the subplanes of the image plane of the system, whereas the object plane of the system is formed by the bed of a scanner for scanning the image of a document.

11. An imaging system according to claim 10, wherein said linear array sensors are light-sensitive CCD's (26,27a,27b).

12. An imaging system according to any of claims 1 to 11, wherein said optical path dividing means is formed by a glass beam splitter (33).

13. An imaging system according to claim 12, wherein two longitudinal surfaces (46,47) of said beam splitter (33) serve as mounting surfaces for the mounting of said base surfaces.

14. An imaging system according to claim 13, wherein at least one linear array sensor is mounted on one of said longitudinal surfaces and at least two linear array sensors are mounted on the other of said longitudinal surfaces of said beam splitter in staggered relationship with said one sensor.

15. An imaging system according to claim 1, wherein the electro-optical components are line-like light sources located in the subfocal planes of the system for being reproduced as one combined light line source in the other focal plane of the system.

## Patentansprüche

1. Abbildungssystem mit Linsenmitteln zum Fokussieren einer ersten Bildebene auf eine zweite Bildebene, zwischen den Linsenmitteln und einer der besagten Ebenen befindlichen Strahlenwegteilmitteln zum Teilen des Strahlenweges in mindestens zwei Teilstrahlenwege, die zu entsprechenden Teilbildebenen führen, mindestens einem elektrooptischen Bauteil, das in einer und mindestens einem weiteren elektrooptischen Bauteil, das in der anderen der besagten Teilbildebenen angeordnet ist, und Fixiermitteln zum Fixieren der räumlichen Lage der besagten elektrooptischen Bauteile, so daß deren aneinandergefügte Bilder zueinander ausgerichtet und in der anderen Bildebene des Systems scharf eingestellt sind,
dadurch gekennzeichnet, daß die besagten Fixiermittel für jede der besagten Teilbildebenen ein längliches Glasglied (33) mit einer Befestigungsfläche (46, 47) für das (die) entsprechende(n) Bauteil(e) und mindestens zwei Befestigungsbeine (60, 61) mit einer Grundfläche (63) und einer sich genau rechtwinklig auf einer solchen Grundfläche erstreckenden Tragfläche (58, 59) umfassen, wobei die Grundflächen haftend an die Befestigungsfläche (46, 47) der besagten Glasglieder angebondet sind und die Tragflächen (58, 59) haftend an die seitlichen Flächen der entsprechenden elektrooptischen Bauteile angebondet sind.

2. Abbildungssystem nach Anspruch 1, wobei die besagten elektrooptischen Bauteile lineare Bauteile sind und die besagten Seitenflächen parallel zur linearen Richtung dieser Bauteile verlaufen.

3. Abbildungssystem nach Anspruch 1 oder 2, wobei die besagten Seitenflächen der besagten elektrooptischen Bauteile durch Seitenflächen (52, 53) des freien Endes von an der von der Befestigungsfläche (46) des Glasgliedes entfernten Seite der Bauteile (26) angebrachten rechteckigen Auslegerstützen gebildet werden.

4. Abbildungssystem nach Anspruch 3, wobei die besagten Auslegerstützen durch zwei sich über die queren Endränder (54) der besagten elektrooptischen Bauteile hinaus erstreckende rechteckige Blöcke (49, 50) gebildet werden.

5. Abbildungssystem nach Anspruch 4, wodurch die besagten Blöcke durch Haftbonden an den besagten elektrooptischen Bauteilen angebracht sind.

6. Abbildungssystem nach 5, wobei die besagten Blöcke aus Glas hergestellt sind.

7. Abbildungssystem nach einem der Ansprüche 3 bis 6, mit vier Befestigungsbeinen für jedes elektrooptische Bauteil.

8. Abbildungssystem nach Anspruch 7, wobei die besagten vier Beine durch die zwei Beine von zwei U-förmigen Jochen gebildet werden, wobei die gegenüberliegenden Innenflächen der Beine die Stützflächen bilden, die mit den freien Enden der Auslegerstützen zum Haftbonden der besagten Stützen an die besagten Beine zusammenwirken, wobei die Beine der besagten Joche mit geringem Freiraum über die freien Enden der besagten Auslegerstützen passen.

9. Abbildungssystem nach Anspruch 8, wobei der besagte Freiraum 0,07 mm unterschreitet.

10. Abbildungssystem nach einem der Ansprüche 1 bis 9, wobei die elektrooptischen Bauteile in den Teilebenen der Bildebene des Systems angeordnete lineare Reihensensoren sind, während die Objektebene des Systems durch das Bett eines Abtasters zum Abtasten des Bildes eines Dokuments gebildet wird.

11. Abbildungssystem nach Anspruch 10, wobei die besagten linearen Reihensensoren lichtempfindliche CCD (26, 27a, 27b) sind.

12. Abbildungssystem nach einem der Ansprüche 1 bis 11, wobei die besagten Strahlenwegteilmittel durch einen Glas-Strahlenteiler (33) gebildet werden.

13. Abbildungssystem nach Anspruch 12, wobei zwei Längsflächen (46, 47) des besagten Strahlenteilers (33) als Befestigungsflächen für die Befestigung der besagten Grundflächen dienen.

14. Abbildungssystem nach Anspruch 13, wobei mindestens ein linearer Reihensensor auf einer der besagten Längsflächen befestigt ist und mindestens zwei lineare Reihensensoren auf der anderen der besagten Längsflächen des besagten Strahlenteilers in versetztem Verhältnis zu besagtem einen Sensor befestigt sind.

15. Abbildungssystem nach Anspruch 1, wobei die elektrooptischen Bauteile in den Teilbildebenen des Systems befindliche zeilenartige Lichtquellen sind, um als eine kombinierte Lichtzeilenquelle in der anderen Bildebene des Systems wiedergegeben zu werden.

## Revendications

1. Système d'imagerie qui comprend un moyen de lentille pour focaliser un premier plan focal sur un deuxième plan focal, un moyen diviseur de trajet optique situé entre le moyen de lentille et l'un desdits plans pour diviser le trajet optique en au moins deux sous-trajets optiques menant à des plans sous-focaux correspondants, au moins un composant électro-optique disposé dans l'un et au moins un autre composant électro-optique disposé dans l'autre desdits plans sous-focaux, et un moyen de fixation pour fixer la position spatiale desdits composants électro-optiques de sorte que les images aboutées de ceux-ci soient alignées et focalisées dans l'autre plan focal du système,
caractérisé en ce que ledit moyen de fixation comprend, pour chacun desdits plans sous-focaux, un organe allongé en verre (33) avec une surface de montage (46, 47) pour le(s) composant(s) correspondant(s), et au moins deux jambages de montage (60, 61) avec une surface de base (63) et une surface d'appui (58, 59) s'étendant de façon véritablement rectangulaire sur cette surface de base, les surfaces de base étant collées à la surface de montage (46, 47) dudit organe en verre et les surfaces d'appui (58, 59) étant collées à des surfaces latérales du (des) composant(s) électro-optique(s) correspondant(s).

2. Système d'imagerie selon la revendication 1, dans lequel lesdits composants électro-optiques sont des composants linéaires, et lesdites surfaces latérales s'étendent parallèlement à la direction linéaire de tels composants.

3. Système d'imagerie selon la revendication 1 ou 2, dans lequel lesdites surfaces latérales desdits composants électro-optiques sont formées par les surfaces latérales (52, 53) de l'extrémité libre d'appuis rectangulaires de type cantilever assemblés sur le côté des composants (26) éloigné de la surface de montage (46) de l'organe en verre.

4. Système d'imagerie selon la revendication 3, dans lequel lesdits appuis de type cantilever sont formés par deux blocs rectangulaires (49, 50) s'étendant au-delà des bords d'extrémité transversale (54) desdits composants électro-optiques.

5. Système d'imagerie selon la revendication 4, dans lequel lesdits blocs sont assemblés avec lesdits composants électro-optiques par collage.

6. Système d'imagerie selon 5, dans lequel lesdits blocs sont constitués de verre.

7. Système d'imagerie selon l'une quelconque des revendications 3 à 6, qui comprend quatre jambages de montage pour chaque composant électro-optique.

8. Système d'imagerie selon la revendication 7, dans lequel lesdits quatre jambages sont formés par les deux jambages de deux étriers en forme d'U, les surfaces internes opposées des jambages formant les surfaces d'appui coopérant avec les extrémités libres des appuis de type cantilever pour le collage desdits appuis auxdits jambages, les jambages desdits étriers s'assemblant avec un petit espacement au-dessus des extrémités libres desdits appuis de type cantilever.

9. Système d'imagerie selon la revendication 8, dans lequel ledit espacement est inférieur à 0,07 mm.

10. Système d'imagerie selon l'une quelconque des revendications 1 à 9, dans lequel les composants électro-optiques sont des capteurs en barrettes disposés dans les sous-plans du plan image du système, alors que le plan objet du système est formé par le fond d'un scanner pour balayer l'image d'un document.

11. Système d'imagerie selon la revendication 10, dans lequel lesdits capteurs en barrettes sont des CCD sensibles à la lumière (26, 27a, 27b).

12. Système d'imagerie selon l'une quelconque des revendications 1 à 11, dans lequel ledit moyen diviseur de trajet optique est formé par un diviseur de faisceau en verre (33).

13. Système d'imagerie selon la revendication 12, dans lequel deux surfaces longitudinales (46, 47) dudit diviseur de faisceau (33) servent des surfaces de montage pour le montage desdites surfaces de base.

14. Système d'imagerie selon la revendication 13, dans lequel au moins un capteur en barrettes est monté sur l'une desdites surfaces longitudinales et au moins deux capteurs en barrettes sont montés sur l'autre desdite surfaces longitudinales dudit diviseur de faisceau de manière décalée avec ledit un capteur.

15. Système d'imagerie selon la revendication 1, dans lequel les composants électro-optiques sont des sources de lumière en forme de ligne situées dans les plans sous-focaux du système pour être reproduites en tant qu'une source de ligne de lumière combinée dans l'autre plan focal du système.
